# EUROPEAN PATENT SPECIFICATION

(11) **EP 3 636 532 B1**
(45) Date of publication and mention of the grant of the patent: **10.03.2021**
(21) Application number: 19195476.7
(22) Date of filing: 05.09.2019
(51) Int. Cl.: B62J 37/00, B62K 11/10, B62J 17/00, B62J 25/04, B62J 35/00, B62K 11/04, B62K 19/06, B62K 19/18, B62K 19/00

(54) **STRADDLED VEHICLE**
GRÄTSCHSITZFAHRZEUG
VÉHICULE À ENFOURCHER

(30) Priority: 11.10.2018 JP 2018192759
(43) Date of publication of application: 15.04.2020
(73) Proprietor: Yamaha Hatsudoki Kabushiki Kaisha, Iwata-shi, Shizuoka 438-8501 (JP)
(72) Inventor: KAWAGUCHI, Tsutomu, Iwata-shi, Shizuoka 438-8501 (JP)
(74) Representative: Grünecker Patent- und Rechtsanwälte PartG mbB

(56) References cited:
- EP-A1- 2 176 116
- EP-A1- 2 522 566
- EP-A1- 2 557 026
- EP-A2- 2 332 813
- US-A1- 2015 166 139

## Description

The present invention relates to a straddled vehicle according to the preamble of independent claim 1. Such a straddled vehicle can be taken from the prior art document EP 2 332 813 A2.

There has been conventionally a type of straddled vehicle in which a fuel tank is disposed directly below a footboard while a fuel port is disposed on a leg shield (see e.g., JP 2010-215214 A). In this type of vehicle, a fuel pipe, through which the fuel port and the fuel tank are connected, is disposed inside the leg shield. Additionally, a down frame extends downward from a head pipe, and right and left lower frames extend backward from the down frame. The fuel tank is disposed between the right and left lower frames. The fuel pipe, extending forward from the fuel tank, is disposed to pass through a position located below the lower frame and a position located in front of the lower frame, and extends upward along the down frame.

In the aforementioned straddled vehicle, the fuel pipe is disposed directly below and in front of the lower frame. Therefore, when it is intended to reliably produce a required distance between a front wheel and the fuel pipe, chances are that the vehicle is unwillingly increased in size. On the other hand, when the fuel pipe is disposed behind the lower frame, the required distance can be easily and reliably produced between the front wheel and the fuel pipe. In this case, however, the position of the leg shield is configured to be shifted to a further rear side than that when the fuel pipe is disposed directly below and in front of the lower frame. Hence, this poses a drawback of reduction in space for putting the feet of a rider.

It is an object of the present invention to provide a straddled vehicle, wherein a large space between a front wheel and a fuel pipe is reliably produced while increase in size of the straddled vehicle is inhibited, and besides, to expand a space for putting the feet of a rider in the straddled vehicle. According to the present invention said object is solved by a straddled vehicle having the features of independent claim 1. Preferred embodiments are laid down in the dependent claims.

A straddled vehicle according to an aspect includes a head pipe, a steering device, a front wheel, a down frame, a first lower frame, a second lower frame, a first rear frame, a second rear frame, a seat, a front cover, a leg shield, a rear cover, a footboard, a fuel tank, a filler port and a fuel pipe. The steering device is turnably supported by the head pipe. The front wheel is rotatably supported by the steering device. The down frame extends downward from the head pipe. The first lower frame extends backward and to one of right and left sides from the down frame. The second lower frame extends backward and to the other of the right and left sides from the down frame. The first rear frame extends backward and upward from the first lower frame. The second rear frame extends backward and upward from the second lower frame. The seat is disposed directly above the first rear frame and the second rear frame.

The front cover is disposed in front of the head pipe and the down frame. The leg shield is disposed behind the front cover. The rear cover is disposed directly below the seat. The footboard is disposed directly above the first lower frame and the second lower frame, and is disposed between the leg shield and the rear cover in a vehicle back-and-forth direction. The fuel tank is disposed directly below the footboard, and is disposed between the first lower frame and the second lower frame in a vehicle right-and-left direction. The filler port is disposed on the leg shield. The fuel pipe connects the filler port and the fuel tank. The fuel pipe is at least in part disposed behind the front wheel as seen in a vehicle side view.

The first lower frame includes a first frame front portion. The first frame front portion is connected to the down frame, and is located in front of the fuel tank. The first frame front portion curves to further protrude forward than the down frame as seen in a vehicle plan view. The fuel pipe is disposed to pass behind the first frame front portion.

In the straddled vehicle according to the present aspect, the fuel pipe is disposed to pass behind the first frame front portion. Because of this, a large space can be reliably produced between the front wheel and the fuel pipe, while increase in size of the vehicle can be inhibited. Additionally, the first frame front portion curves to further protrude forward than the down frame as seen in the vehicle plan view. Because of this, the fuel pipe can be disposed in as forward a position as possible. Accordingly, the footboard can be enlarged in the back-and-forth direction. In other words, a space for putting the feet of a rider can be expanded.

A front edge of the first frame front portion may be at least in part located forward of a front edge of the down frame as seen in the vehicle side view. In this case, the fuel pipe can be disposed in as forward a position as possible. Accordingly, the footboard can be enlarged in the back-and-forth direction.

A rear edge of the first frame front portion may be at least in part located forward of a center axis of the down frame as seen in the vehicle side view. In this case, the first frame front portion largely curves to protrude forward, whereby the fuel pipe can be disposed in as forward a position as possible. Accordingly, the footboard can be enlarged in the back-and-forth direction.

The second lower frame may include a second frame front portion connected to the down frame. The first frame front portion may curve to further protrude forward than the second frame front portion. As described above, the first frame front portion curves to protrude forward, whereby the fuel pipe can be disposed in as forward a position as possible. Accordingly, the space for putting the feet of a rider can be expanded. However, from the perspective of reducing stress concentration on a part at which the down frame and the first lower frame are connected, the down frame is preferably disposed to overlap the first lower frame as seen in the side view. By contrast, when the first frame front portion curves to protrude forward, stress concentration inevitably shifts forward. Accordingly, degradation in stiffness of the first lower frame is concerned. Especially, when the first and second lower frames are shaped symmetrically to each other, degradation in stiffness of the both is concerned. Moreover in attempt to enhance the stiffness of the first and second lower frames per se so as to inhibit degradation in stiffness of the both, increase in size of the first and second lower frames is concerned. Furthermore, with increase in size of the first and second lower frames, the position of the leg shield is shifted backward. Accordingly, reduction in space for putting the feet of a rider is also concerned. In view of the above, according to the present aspect, the first frame front portion curves to further protrude forward than the second frame front portion. In other words, the first and second lower frames are shaped asymmetrically from each other. Because of this, degradation in stiffness of the first lower frame can be compensated by the second lower frame. Therefore, degradation in stiffness of the first and second lower frames can be inhibited, while increase in size of the first and second lower frames can be inhibited.

The first lower frame may include a first connecting end portion connected to the down frame. The second lower frame may include a second connecting end portion connected to the down frame. The first connecting end portion may be at least in part located above the second connecting end portion as seen in a vehicle front view. As described above, when the first frame front portion curves forward, degradation in stiffness of the first lower frame is concerned. Additionally, in attempt to enhance the stiffness of the first lower frame per se, increase in size of the first lower frame and reduction in space for putting the feet of a rider are concerned. However, according to the present aspect, the first connecting end portion is disposed in a high position, whereby the stiffness of the first lower frame can be enhanced. Because of this, even when the first frame front portion curves forward, degradation in stiffness of the first lower frame can be inhibited while increase in size of the first lower frame and reduction in space for putting the feet of a rider can be inhibited.

An upper end of the first connecting end portion may be located above an upper end of the second connecting end portion as seen in the vehicle front view. In this case, the first connecting end portion is disposed in a high position, whereby the stiffness of the first lower frame can be enhanced. Accordingly, even when the first frame front portion curves, degradation in stiffness of the first lower frame can be inhibited.

A lower end of the first connecting end portion may be located above a lower end of the second connecting end portion as seen in the vehicle front view. In this case, the first connecting end portion is disposed in a high position, whereby the stiffness of the first lower frame can be enhanced. Accordingly, even when the first frame front portion curves, degradation in stiffness of the first lower frame can be inhibited.

A center axis of the first lower frame may be located forward of the center axis of the down frame at the first connecting end portion as seen in the vehicle side view. In this case, the first frame front portion largely curves to protrude forward, whereby the fuel pipe can be disposed in as forward a position as possible. Accordingly, the footboard can be enlarged in the back-and-forth direction.

The rear edge of the first frame front portion may be at least in part located forward of a rear end of the first connecting end portion as seen in the vehicle plan view. In this case, the first frame front portion largely curves to protrude forward, whereby the fuel pipe can be disposed in as forward a position as possible. Accordingly, the footboard can be enlarged in the back-and-forth direction.

The fuel pipe may at least in part overlap the down frame in a position located just behind the first frame front portion as seen in the vehicle side view. In this case, the fuel pipe is disposed in as forward a position as possible, whereby the footboard can be enlarged in the back-and-forth direction.

The fuel pipe may include a first pipe portion, a second pipe portion and a bent pipe portion. The first pipe portion may be connected to the fuel tank. The second pipe portion may be disposed laterally to the down frame. The bent pipe portion may be located between the first pipe portion and the second pipe portion. The bent pipe portion may be located in front of the footboard, and may overlap the footboard as seen in the vehicle front view. In this case, the bent pipe portion can be disposed in adjacent to the footboard, while avoiding from interfering with the footboard. Accordingly, the footboard can be enlarged in the back-and-forth direction.

The bent pipe portion may at least in part overlap the down frame as seen in the vehicle side view. In this case, the fuel pipe is disposed in as forward a position as possible, whereby the footboard can be enlarged in the back-and-forth direction.

A front edge of the fuel pipe may be located backward of the front edge of the down frame as seen in the vehicle side view. In this case, a large space can be reliably produced between the front wheel and the fuel pipe, while increase in size of the vehicle can be inhibited.

Overall, according to the present teaching, it is possible to reliably produce a large space between the front wheel and the fuel pipe in the straddled vehicle while increase in size of the straddled vehicle is inhibited, and besides, to expand a space for putting the feet of a rider in the straddled vehicle.

### BRIEF DESCRIPTION OF THE DRAWINGS

FIG. 1 is a side view of a straddled vehicle according to a preferred embodiment.
FIG. 2 is a plan view of a vehicle body frame.
FIG. 3 is a perspective view of the vehicle body frame and a fuel tank.
FIG. 4 is a side view of the vehicle body frame and the fuel tank.
FIG. 5 is a front view of the vehicle body frame and the fuel tank.
FIG. 6 is an enlarged plan view of the vehicle body frame and the fuel tank.
FIG. 7 is an enlarged side view of the vehicle body frame and the fuel tank.
FIG. 8 is an enlarged side view of the vehicle body frame.
FIG. 9 is a cross-sectional view of FIG. 8 taken along line IX-IX.
FIG. 10 is an enlarged front view of the vehicle body frame.

### DETAILED DESCRIPTION OF THE PREFERRED EMBODIMENTS

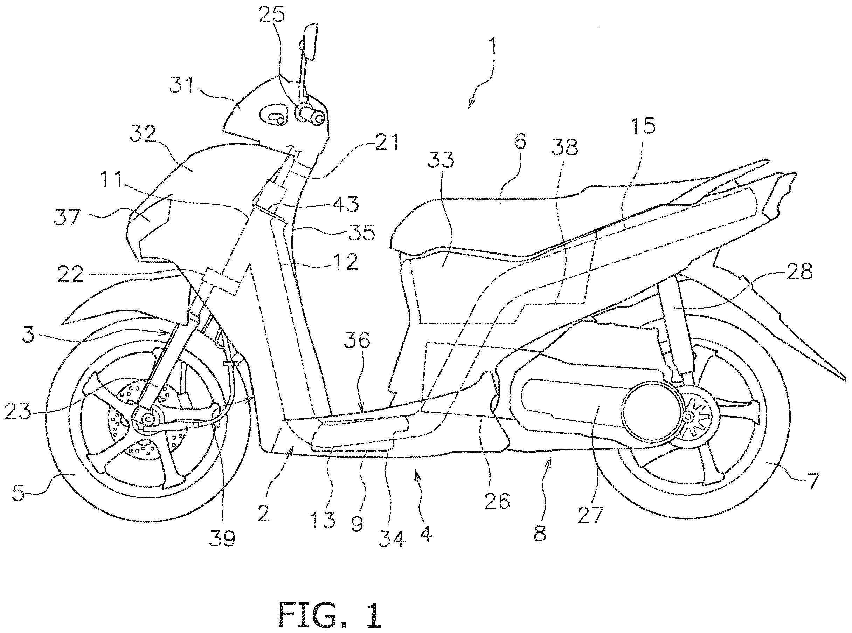

A straddled vehicle 1 according to a preferred embodiment will be hereinafter explained with reference to drawings. FIG. 1 is a side view of the straddled vehicle 1. The straddled vehicle 1 according to the present preferred embodiment is a scooter-type vehicle. As shown in FIG. 1, the straddled vehicle 1 includes a vehicle body frame 2, a steering device 3, a vehicle body cover 4, a front wheel 5, a seat 6, a rear wheel 7, a power unit 8 and a fuel tank 9.

It should be noted that in the present specification, a back-and-forth direction, an up-and-down direction and a right-and-left direction of the straddled vehicle 1 refer to the back-and-forth direction, the up-and-down direction and the right-and-left direction seen from a rider riding on the straddled vehicle 1. Additionally, the back-and-forth direction is defined as not only indicating directions arranged in parallel to the back-and-forth direction of the straddled vehicle 1, but also encompassing directions tilting within an angular range of ±45 degrees with respect to the back-and-forth direction of the straddled vehicle 1. In other words, a given direction closer to the back-and-forth direction than to the right-and-left direction and the up-and-down direction is classified as the back-and-forth direction.

Likewise, the up-and-down direction is defined as encompassing directions tilting within an angular range of ±45 degrees with respect to the up-and-down direction of the straddled vehicle 1. In other words, a given direction closer to the up-and-down direction than to the back-and-forth direction and the right-and-left direction is classified as the up-and-down direction. Moreover, the right-and-left direction is defined as encompassing directions tilting within an angular range of ±45 degrees with respect to the right-and-left direction of the straddled vehicle 1. In other words, a given direction closer to the right-and-left direction than to the back-and-forth direction and the up-and-down direction is classified as the right-and-left direction.

In the present specification, the term "connection" is not limited to direct connection, and encompasses indirect connection. Additionally, the term "connection" is not limited to a condition that separate members are fixed to each other, and encompasses a condition that a plurality of portions in an integrated member continue to each other.

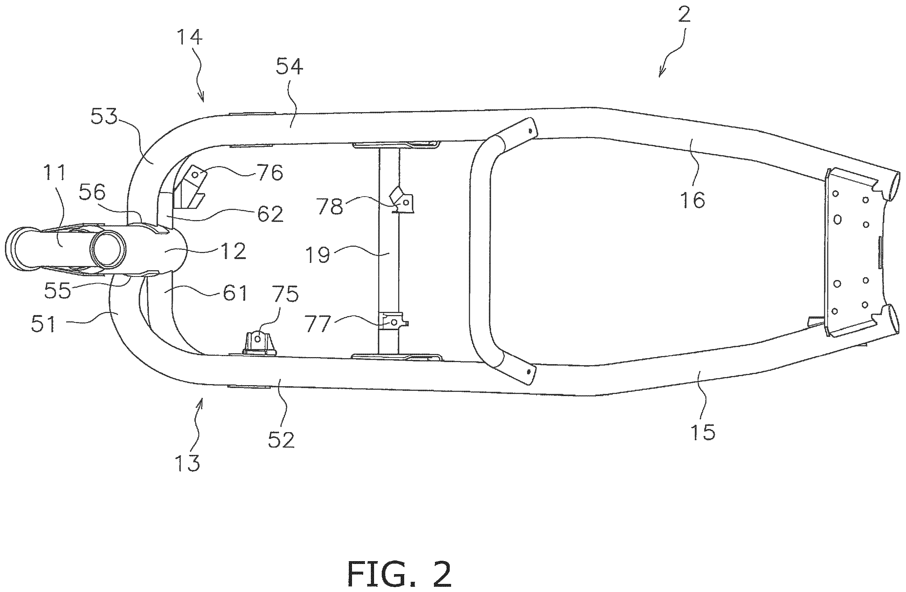

FIG. 2 is a plan view of the vehicle body frame 2. As shown in FIGS. 1 and 2, the vehicle body frame 2 includes a head pipe 11, a down frame 12, a first lower frame 13, a second lower frame 14, a first rear frame 15 and a second rear frame 16. As seen in the vehicle side view, the head pipe 11 tilts backward and upward. The down frame 12 extends downward from the head pipe 11.

The first lower frame 13 and the second lower frame 14 are connected to a lower part of the down frame 12. The first lower frame 13 extends leftward and backward from the down frame 12. The second lower frame 14 extends rightward and backward from the down frame 12. The first rear frame 15 extends backward and upward from the first lower frame 13. The second rear frame 16 extends backward and upward from the second lower frame 14.

The steering device 3 is turnably supported by the head pipe 11. The steering device 3 includes a steering shaft 21, an under bracket 22 and right and left suspensions 23. It should be noted that FIG. 1 shows only the left suspension 23. The steering shaft 21 is inserted into the head pipe 11. The steering shaft 21 is connected at an upper part thereof to a handle 25. The steering shaft 21 is supported by the head pipe 11 and is thereby turnable right and left. The under bracket 22 is connected to a lower part of the steering shaft 21. The right and left suspensions 23 are connected at the upper ends thereof to the under bracket 22. The front wheel 5 is rotatably supported by the right and left suspensions 23.

The vehicle body cover 4 includes a handle cover 31, a front cover 32, a rear cover 33, a lower cover 34, a leg shield 35 and a mud cover 39. The handle cover 31 covers the front and rear sides of the handle 25. A meter panel, including a speedometer and so forth, is attached to the upper surface of the handle cover 31.

The front cover 32 is disposed in front of the head pipe 11 and the down frame 12. A headlight 37 is disposed in the front cover 32. The leg shield 35 is disposed behind the front cover 32. The leg shield 35 is disposed behind the head pipe 11 and the down frame 12. The mud cover 39 is disposed behind the front wheel 5 and in front of the leg shield 35. The rear cover 33 covers the surroundings of the first and second rear frames 15 and 16. The rear cover 33 is disposed below the seat 6.

The seat 6 is disposed backward of the head pipe 11. The seat 6 is disposed directly above the first and second rear frames 15 and 16. A storage box 38 is disposed inside the rear cover 33. The storage box 38 is disposed directly below the seat 6. The lower cover 34 is disposed between the front cover 32 and the rear cover 33. The lower cover 34 covers the surroundings of the first and second lower frames 13 and 14. The upper surface of the lower cover 34 includes a footboard 36.

The footboard 36 is disposed below and forward of the seat 6. The footboard 36 is disposed directly above the first and second lower frames 13 and 14. In other words, as seen in the vehicle plan view, the footboard 36 overlaps the first and second lower frames 13 and 14. The footboard 36 is disposed between the leg shield 35 and the rear cover 33 in the vehicle back-and-forth direction. The fuel tank 9 is disposed directly below the footboard 36. In other words, as seen in the vehicle plan view, the fuel tank 9 overlaps the footboard 36.

The footboard 36 is provided for allowing a rider to put his/her feet thereon. The footboard 36 has an entirely flat shape in a vehicle width direction. However, the footboard 36 may not have a flat shape. For example, a center tunnel portion may be provided in the middle of the footboard 36. The center tunnel portion has an upwardly protruding shape and extends in the back-and-forth direction.

The power unit 8 is disposed directly below the seat 6. The power unit 8 is pivotably supported by the vehicle body frame 2. The power unit 8 supports the rear wheel 7 such that the rear wheel 7 is rotatable. The rear wheel 7 is supported by the vehicle body frame 2 through a rear suspension 28. The power unit 8 includes an engine 26 and a transmission 27.

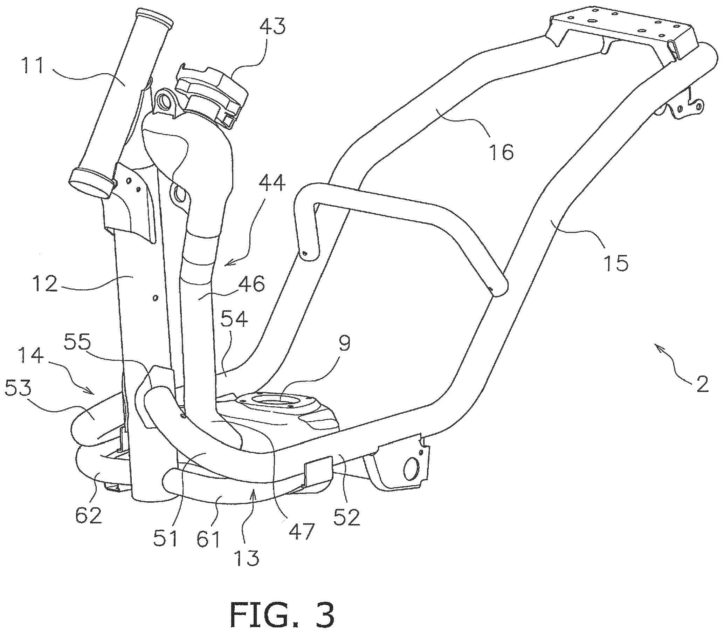

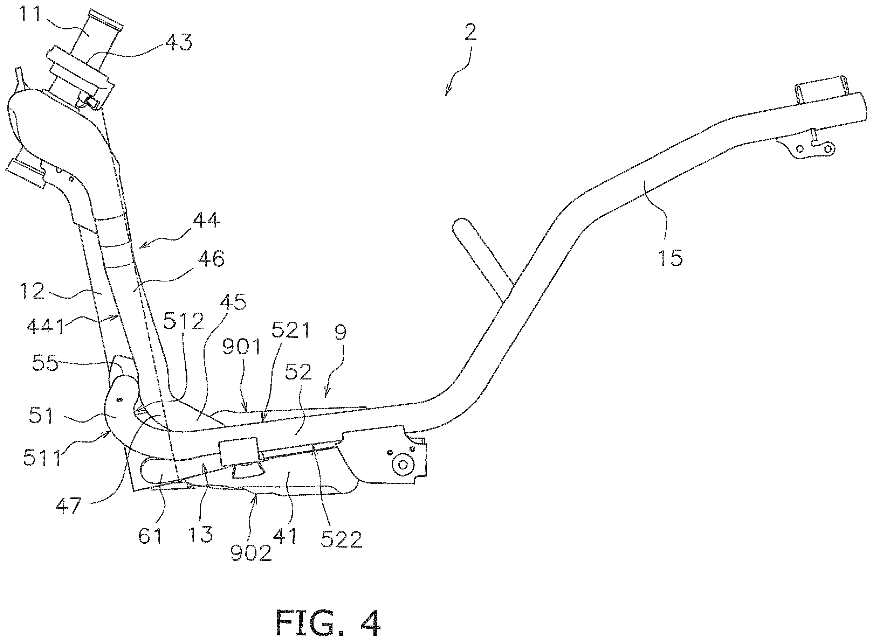

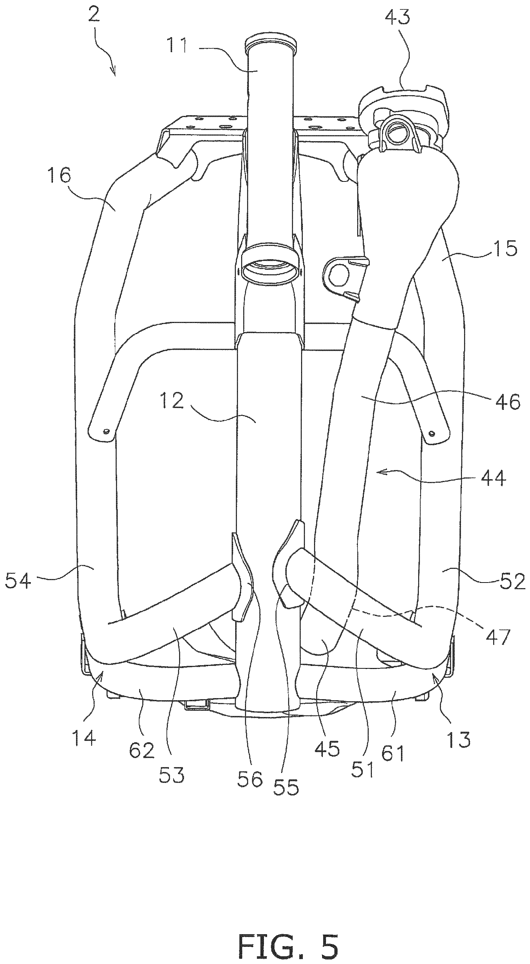

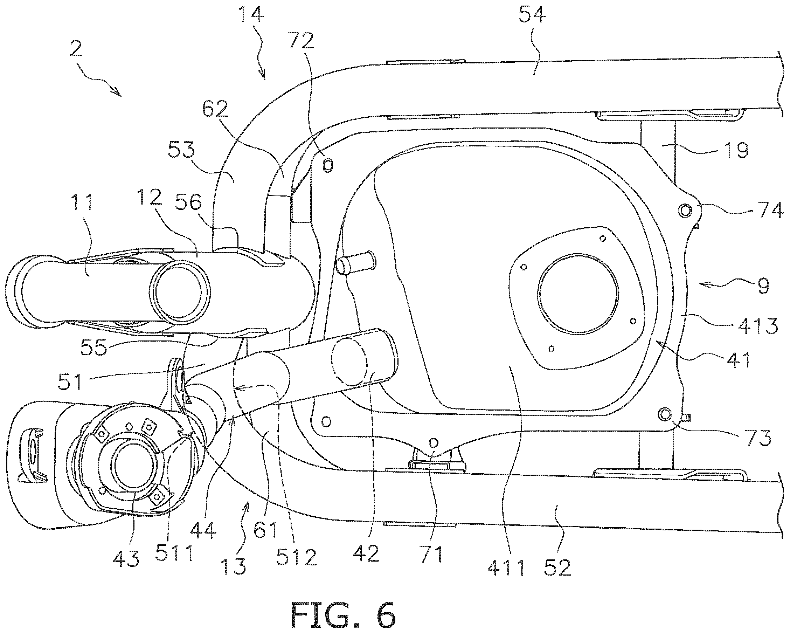

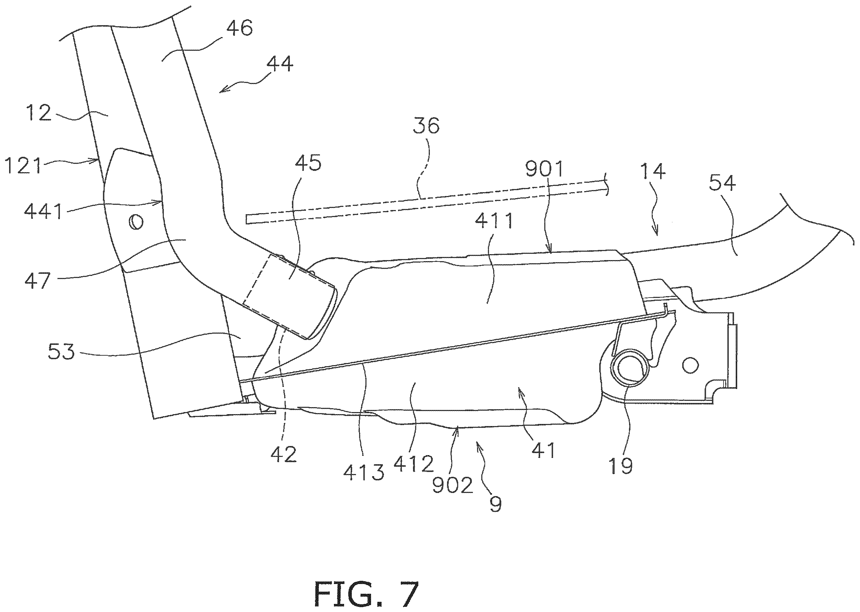

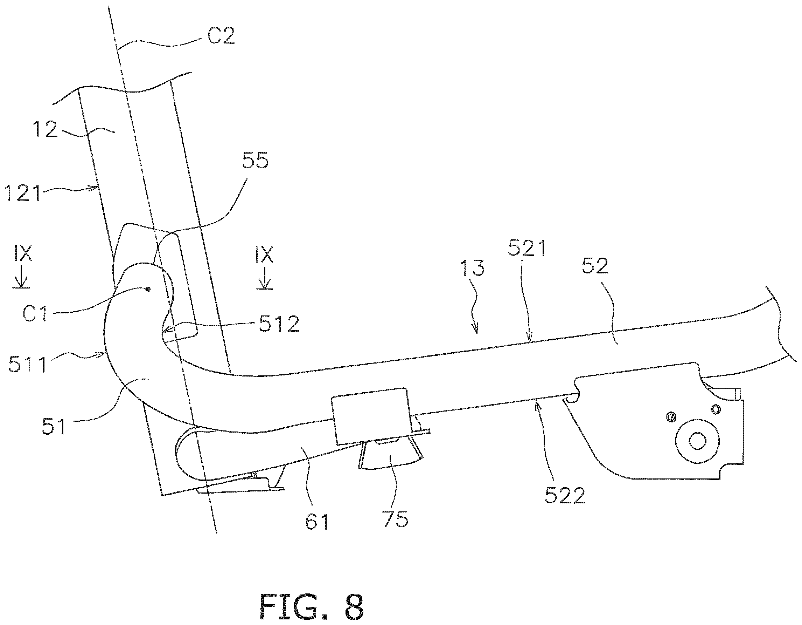

Next, configurations of the vehicle body frame 2 and the fuel tank 9 will be explained. FIG. 3 is a perspective view of the vehicle body frame 2 and the fuel tank 9. FIG. 4 is a side view of the vehicle body frame 2 and the fuel tank 9. FIG. 5 is a front view of the vehicle body frame 2 and the fuel tank 9. FIG. 6 is an enlarged plan view of the vehicle body frame 2 and the fuel tank 9. FIG. 7 is an enlarged side view of the vehicle body frame 2 and the fuel tank 9. It should be noted that the first lower frame 13 is not shown in FIG. 7. FIG. 8 is an enlarged side view of the vehicle body frame 2.

The fuel tank 9 is disposed between the first lower frame 13 and the second lower frame 14 in the vehicle right-and-left direction. As shown in FIGS. 6 and 7, the fuel tank 9 includes a tank body 41 and an inlet pipe 42. The tank body 41 has a space for storing fuel in the interior thereof. The tank body 41 includes an upper body 411 and a lower body 412. The upper body 411 and the lower body 412 are provided separately from each other. Hence, the tank body 41 is structured to be split into up and down parts. The fuel tank 9 includes a flange portion 413. The flange portion 413 protrudes from the tank body 41 forward, rearward, rightward and leftward. The upper body 411 and the lower body 412 are joined at the flange portion 413. The inlet pipe 42 is connected to the tank body 41. Detailedly, the inlet pipe 42 is connected to the upper body 411. The inlet pipe 42 protrudes forward and upward from the tank body 41. The inlet pipe 42 is located backward of the down frame 12.

As shown in FIGS. 3 to 7, the straddled vehicle 1 includes a filler port 43 and a fuel pipe 44. As shown in FIG. 4, the filler port 43 is disposed laterally to the head pipe 11. In the vehicle side view, the filler port 43 overlaps the head pipe 11. As shown in FIG. 1, the filler port 43 is disposed on and through the leg shield 35. The fuel pipe 44 connects the filler port 43 and the fuel tank 9 therethrough. As seen in the vehicle side view, the fuel pipe 44 is at least in part disposed behind the front wheel 5. The fuel pipe 44 is at least in part disposed between the mud cover 39 and the leg shield 35, both of which are shown in FIG. 1. The fuel pipe 44 extends forward and upward from the fuel tank 9, and then extends upward along the down frame 12.

As seen in the vehicle side view of FIG. 7, a front edge 441 of the fuel pipe 44 is located backward of a front edge 121 of the down frame 12. The fuel pipe 44 includes a first pipe portion 45, a second pipe portion 46 and a bent pipe portion 47. The first pipe portion 45 is connected to the fuel tank 9. Detailedly, the first pipe portion 45 is connected to the inlet pipe 42. The first pipe portion 45 extends forward and upward.

The second pipe portion 46 is disposed laterally to the down frame 12. As seen in the vehicle side view, the second pipe portion 46 at least in part overlaps the down frame 12. The second pipe portion 46 extends upward along the down frame 12. As seen in the vehicle side view, the second pipe portion 46 is located backward of the front edge 121 of the down frame 12. The second pipe portion 46 is connected to the filler port 43.

The bent pipe portion 47 is located between the first pipe portion 45 and the second pipe portion 46. The bent pipe portion 47 is located in front of the footboard 36. The bent pipe portion 47 is at least in part located at the same height as the footboard 36. In other words, the bent pipe portion 47 overlaps the footboard 36 as seen in the vehicle front view. As seen in the vehicle side view, the bent pipe portion 47 at least in part overlaps the down frame 12. As seen in the vehicle side view, the bent pipe portion 47 is located backward of the front edge 121 of the down frame 12.

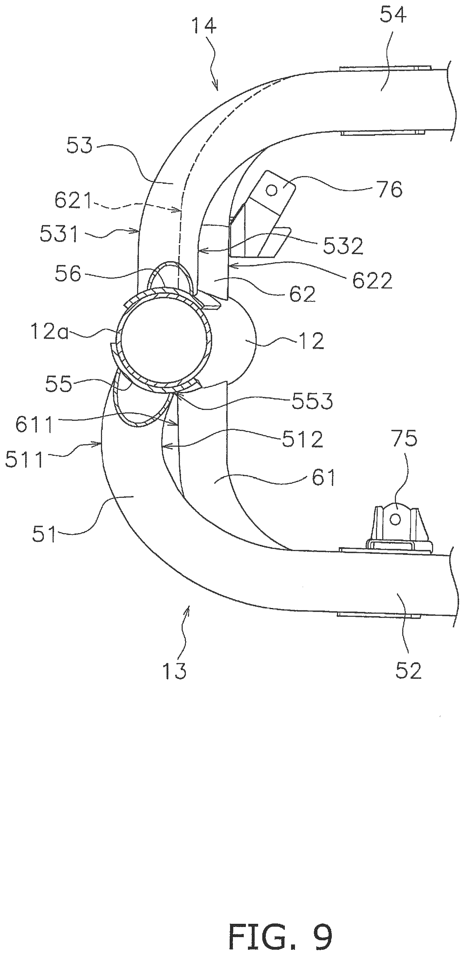

FIG. 9 is a cross-sectional view of FIG. 8 taken along line IX-IX. As shown in FIG. 9, the first lower frame 13 includes a first frame front portion 51 and a first frame rear portion 52. The second lower frame 14 includes a second frame front portion 53 and a second frame rear portion 54. The first lower frame 13 and the second lower frame 14 are shaped to be bilaterally asymmetrical from each other. Detailedly, the first frame front portion 51 and the second frame front portion 53 are shaped to be bilaterally asymmetrical to each other.

The first frame front portion 51 is located in front of the fuel tank 9. The first frame front portion 51 is connected to the down frame 12. The first frame front portion 51 extends forward and sideward from the down frame 12 and then curves backward. As seen in the vehicle plan view, the first frame front portion 51 curves to protrude forward. The first frame rear portion 52 extends backward from the first frame front portion 51. The first frame rear portion 52 is connected to the first rear frame 15.

The second frame front portion 53 is connected to the down frame 12. The second frame front portion 53 extends sideward from the down frame 12 and then curves backward. The second frame rear portion 54 extends backward from the second frame front portion 53. The second frame rear portion 54 is connected to the second rear frame 16.

As seen in the vehicle plan view of FIG. 9, the first frame front portion 51 curves to further protrude forward than the second frame front portion 53. As seen in the vehicle plan view, a front edge 511 of the first frame front portion 51 is at least in part located forward of a front edge 531 of the second frame front portion 53. As seen in the vehicle plan view, a rear edge 512 of the first frame front portion 51 is at least in part located forward of a rear edge 532 of the second frame front portion 53.

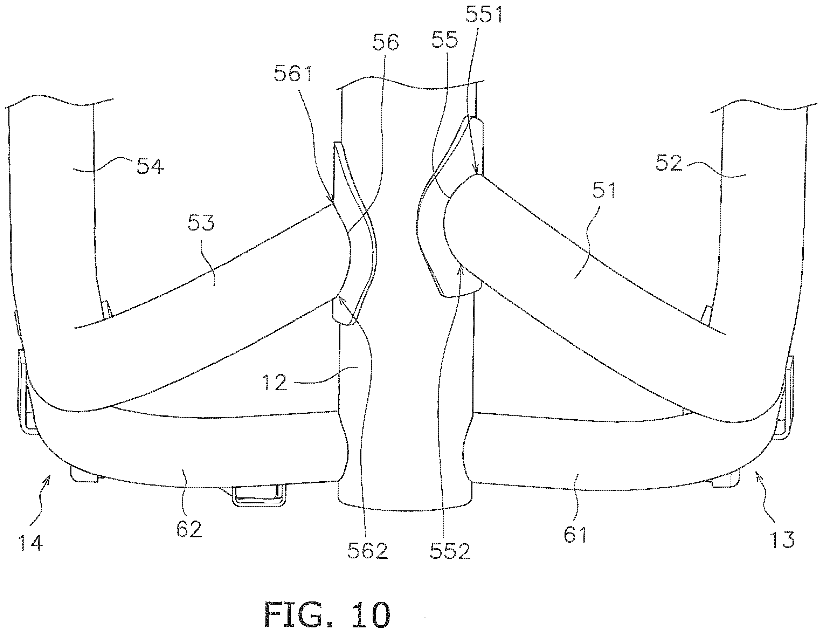

FIG. 10 is an enlarged front view of the vehicle body frame 2. As shown in FIG. 10, the first lower frame 13 includes a first connecting end portion 55 connected to the down frame 12. The second lower frame 14 includes a second connecting end portion 56 connected to the down frame 12. As seen in the vehicle front view, the first connecting end portion 55 is at least in part located above the second connecting end portion 56. Detailedly, as seen in the vehicle front view, an upper end 551 of the first connecting end portion 55 is located above an upper end 561 of the second connecting end portion 56. As seen in the vehicle front view, a lower end 552 of the first connecting end portion 55 is located above a lower end 562 of the second connecting end portion 56. As seen in the vehicle front view, the first frame front portion 51 extends downward and sideward from the first connecting end portion 55. As seen in the vehicle front view, the second frame front portion 53 extends downward and sideward from the second connecting end portion 56.

The first frame rear portion 52 and the second frame rear portion 54 are located at approximately the same height as each other. As seen in the vehicle side view of FIG. 4, the first frame rear portion 52 overlaps the fuel tank 9. As seen in the vehicle side view, a top surface 901 of the fuel tank 9 is at least in part located above an upper edge 521 of the first frame rear portion 52. As seen in the vehicle side view, a bottom surface 902 of the fuel tank 9 is at least in part located below a lower edge 522 of the first frame rear portion 52. As seen in the vehicle side view, the inlet pipe 42 at least in part overlaps the first lower frame 13.

As seen in the vehicle side view of FIG. 8, a center axis C1 of the first lower frame 13 is located forward of a center axis C2 of the down frame 12 at the first connecting end portion 55. As seen in the vehicle side view, the front edge 511 of the first frame front portion 51 is at least in part located forward of the front edge 121 of the down frame 12. As seen in the vehicle side view, the rear edge 512 of the first frame front portion 51 is at least in part located forward of the center axis C2 of the down frame 12.

As seen in the vehicle plan view of FIG. 9, the rear edge 512 of the first frame front portion 51 is at least in part located forward of a rear end 553 of the first connecting end portion 55. In FIG. 9, the reference sign "12a" denotes a portion of the down frame 12, which is depicted with a cross section taken along a horizontal plane passing through the first connecting end portion 55. As seen in the vehicle plan view, the first frame front portion 51 curves to further protrude forward than the portion 12a of the down frame 12. As seen in the vehicle plan view, the front edge 511 of the first frame front portion 51 is at least in part located forward of the front end of the portion 12a of the down frame 12. As seen in the vehicle plan view, the rear edge 512 of the first frame front portion 51 is at least in part located forward of the rear end of the portion 12a of the down frame 12.

The vehicle body frame 2 includes a first reinforcement member 61 and a second reinforcement member 62. The first reinforcement member 61 extends from the down frame 12 to one lateral side and then curves backward. The second reinforcement member 62 extends from the down frame 12 to the other lateral side and then curves backward.

The first reinforcement member 61 is disposed directly below the first lower frame 13. The first reinforcement member 61 is connected to the down frame 12 and the first lower frame 13. The first reinforcement member 61 is connected to the down frame 12 at a lower position than the first connecting end portion 55. The second reinforcement member 62 is disposed directly below the second lower frame 14. The second reinforcement member 62 is connected to the down frame 12 and the second lower frame 14. The second reinforcement member 62 is connected to the down frame 12 at a lower position than the second connecting end portion 56.

As seen in the vehicle plan view, the front edge 511 of the first frame front portion 51 is at least in part located forward of a front edge 611 of the first reinforcement member 61. As seen in the vehicle plan view, the rear edge 512 of the first frame front portion 51 is at least in part located forward of the front edge 611 of the first reinforcement member 61. As seen in the vehicle plan view, the front edge 531 of the second frame front portion 53 is at least in part located forward of a front edge 621 of the second reinforcement member 62. As seen in the vehicle plan view, the rear edge 532 of the second frame front portion 53 is at least in part located backward of the front edge 621 of the second reinforcement member 62. As seen in the vehicle plan view, the rear edge 532 of the second frame front portion 53 is at least in part located forward of a rear edge 622 of the second reinforcement member 62.

As shown in FIG. 6, the fuel tank 9 includes a plurality of attachment portions 71 to 74 for attaching the fuel tank 9 to the vehicle body frame 2. The attachment portions 71 to 74 are provided in the flange portion 413. Each of the attachment portions 71 to 74 includes a hole, and is attached to the vehicle body frame 2 by inserting a fixation member such as a bolt into the hole.

Detailedly, the fuel tank 9 includes the first attachment portion 71, the second attachment portion 72, the third attachment portion 73 and the fourth attachment portion 74. The first attachment portion 71 is disposed laterally to the tank body 41. As seen in the vehicle plan view, the first attachment portion 71 is disposed away from the down frame 12 to the left side. The first attachment portion 71 is disposed on the left side of the tank body 41. As seen in the vehicle plan view, the first attachment portion 71 is disposed behind the first frame front portion 51. As seen in FIG. 9, a first bracket 75 is attached to the first lower frame 13. The first attachment portion 71 is attached to the first lower frame 13 through the first bracket 75.

As seen in the vehicle plan view, the second attachment portion 72 is disposed away from the down frame 12 to the right side. The second attachment portion 72 is disposed in front of the tank body 41. As shown in FIG. 9, a second bracket 76 is attached to the second lower frame 14. The second attachment portion 72 is attached to the second lower frame 14 through the second bracket 76.

The third and fourth attachment portions 73 and 74 are disposed behind the tank body 41. As shown in FIG. 2, the vehicle body frame 2 includes a cross member 19. The cross member 19 extends in the vehicle width direction and is connected to the first and second lower frames 13 and 14. A third bracket 77 and a fourth bracket 78 are attached to the cross member 19. The third attachment portion 73 is attached to the cross member 19 through the third bracket 77. The fourth attachment portion 74 is attached to the cross member 19 through the fourth bracket 78.

The fuel pipe 44 is disposed to pass behind the first frame front portion 51. In other words, the fuel pipe 44 is located backward of the first frame front portion 51 in a position located just behind the first frame front portion 51. The fuel pipe 44 is located backward of the first frame front portion 51 in a position located below the first connecting end portion 55.

As seen in the vehicle side view of FIG. 4, the fuel pipe 44 at least in part overlaps the down frame 12 in a position located just behind the first frame front portion 51. Detailedly, as seen in the vehicle side view, the front edge 441 of the fuel pipe 44 at least in part overlaps the down frame 12 in a position located just behind the first frame front portion 51. As seen in the vehicle side view, the fuel pipe 44 at least in part overlaps the down frame 12 in a position located below the first connecting end portion 55. Detailedly, as seen in the vehicle side view, the front edge 441 of the fuel pipe 44 at least in part overlaps the down frame 12 in a position located below the first connecting end portion 55.

In the straddled vehicle 1 according to the present preferred embodiment explained above, the fuel pipe 44 is disposed to pass behind the first frame front portion 51. Because of this, a large space can be reliably produced between the front wheel 5 and the fuel pipe 44, while increase in size of the straddled vehicle 1 can be inhibited. Additionally, the first frame front portion 51 curves to protrude forward as seen in the vehicle plan view. Because of this, the fuel pipe 44 can be disposed in as forward a position as possible. Accordingly, the footboard 36 can be enlarged in the back-and-forth direction. In other words, a space for putting the feet of a rider can be expanded.

The front edge 511 of the first frame front portion 51 is at least in part located forward of the front edge 121 of the down frame 12 as seen in the vehicle side view. Because of this, the fuel pipe 44 can be disposed in as forward a position as possible. Accordingly, the footboard 36 can be enlarged in the back-and-forth direction.

The rear edge 512 of the first frame front portion 51 is at least in part located forward of the center axis C2 of the down frame 12 as seen in the vehicle side view. Because of this, the first frame front portion 51 largely curves to protrude forward, whereby the fuel pipe 44 can be disposed in as forward a position as possible. Accordingly, the footboard 36 can be enlarged in the back-and-forth direction.

The first connecting end portion 55 is at least in part located above the second connecting end portion 56 as seen in the vehicle front view. Thus, the first connecting end portion 55 is disposed in a high position, whereby the stiffness of the first lower frame 13 can be enhanced. Accordingly, even when the first frame front portion 51 curves forward, degradation in stiffness of the first lower frame 13 can be inhibited.

The center axis C1 of the first lower frame 13 is located forward of the center axis C2 of the down frame 12 at the first connecting end portion 55 as seen in the vehicle side view. Because of this, the first frame front portion 51 largely curves to protrude forward, whereby the fuel pipe 44 can be disposed in as forward a position as possible. Accordingly, the footboard 36 can be enlarged in the back-and-forth direction.

The rear edge 512 of the first frame front portion 51 is at least in part located forward of the rear end 553 of the first connecting end portion 55 as seen in the vehicle plan view. Because of this, the first frame front portion 51 largely curves to protrude forward, whereby the fuel pipe 44 can be disposed in as forward a position as possible. Accordingly, the footboard 36 can be enlarged in the back-and-forth direction.

The fuel pipe 44 at least in part overlaps the down frame 12 in a position located just behind the first frame front portion 51 as seen in the vehicle side view. Because of this, the fuel pipe 44 is disposed in as forward a position as possible, whereby the footboard 36 can be enlarged in the back-and-forth direction.

The bent pipe portion 47 of the fuel pipe 44 is located in front of the footboard 36, and overlaps the footboard 36 as seen in the vehicle front view. Because of this, the bent pipe portion 47 can be disposed in adjacent to the footboard 36, while avoiding from interfering the footboard 36. Accordingly, the footboard 36 can be enlarged in the back-and-forth direction.

The bent pipe portion 47 overlaps the down frame 12 as seen in the vehicle side view. Because of this, the fuel pipe 44 is herein disposed in as forward a position as possible, whereby the footboard 36 can be enlarged in the back-and-forth direction.

The front edge 441 of the fuel pipe 44 is located backward of the front edge 121 of the down frame 12 as seen in the vehicle side view. Because of this, a large space can be reliably produced between the front wheel 5 and the fuel pipe 44, while increase in size of the vehicle can be inhibited.

The straddled vehicle 1 is not limited to a scooter-type vehicle, and alternatively, may be another type of vehicle. The number of front wheels is not limited to one, and alternatively, may be two or greater. Instead of this, the number of rear wheels is not limited to one, and alternatively, may be two or greater.

The positions of the first lower frame 13 and the second lower frame 14 may be bilaterally reversed to those in the aforementioned preferred embodiment. In this case, both the fuel pipe 44 and the filler port 43 may be disposed bilaterally on the opposite side of those in the aforementioned preferred embodiment.

The first connecting end portion 55 or the second connecting end portion 56 may be changed in shape or layout. The fuel tank 9, the fuel pipe 44 or the filler port 43 may be changed in shape or layout. The first reinforcement member 61 or the second reinforcement member 62 may be changed in shape or layout. Instead of this, the first reinforcement member 61 and/or the second reinforcement member 62 may be omitted.

### INDUSTRIAL APPLICABILITY

According to the present teaching, it is possible to reliably produce a large space between a front wheel and a fuel pipe in a straddled vehicle while increase in size of the straddled vehicle is inhibited, and besides, to expand a space for putting the feet of a rider in the straddled vehicle.

### REFERENCE SIGNS LIST

- 6: Seat
- 9: Fuel tank
- 11: Head pipe
- 12: Down frame
- 13: First lower frame
- 14: Second lower frame
- 15: First rear frame
- 16: Second rear frame
- 32: Front cover
- 33: Rear cover
- 35: Leg shield
- 36: Footboard
- 43: Filler port
- 44: Fuel pipe
- 45: First pipe portion
- 46: Second pipe portion
- 47: Bent pipe portion
- 51: First frame front portion
- 55: First connecting end portion
- 56: Second connecting end portion

## Claims

1. A straddled vehicle comprising:
a head pipe (11);
a steering device (3) turnably supported by the head pipe (11);
a front wheel (5) rotatably supported by the steering device (3);
a down frame (12) extending downward from the head pipe (11) in an up-and-down direction of the vehicle;
a first lower frame (13) extending backward in a back-and-forth direction of the vehicle and to one of right and left sides from the down frame (12) in a right-and-left direction of the vehicle;
a second lower frame (14) extending backward in the back-and-forth direction of the vehicle and to the other of the right and left sides from the down frame (12) in the right-and-left direction of the vehicle;
a first rear frame (15) extending backward in the back-and-forth direction of the vehicle and upward from the first lower frame (13) in the up-and-down direction of the vehicle;
a second rear frame (16) extending backward in the back-and-forth direction of the vehicle and upward from the second lower frame (14) in the up-and-down direction of the vehicle;
a seat (6) disposed above the first rear frame (15) and the second rear frame (16) in the up-and-down direction of the vehicle;
a front cover (32) disposed in front of the head pipe (11) and the down frame (12) in the back-and-forth direction of the vehicle;
a leg shield (35) disposed behind the front cover (32) in the back-and-forth direction of the vehicle;
a rear cover (33) disposed below the seat (6) in the up-and-down direction of the vehicle;
a footboard (36) disposed above the first lower frame (13) and the second lower frame (14) in the up-and-down direction of the vehicle, the footboard (36) being disposed between the leg shield (35) and the rear cover (33) in the back-and-forth direction of the vehicle;
a fuel tank (9) disposed below the footboard (36) in the up-and-down direction of the vehicle, the fuel tank (9) being disposed between the first lower frame (13) and the second lower frame (14) in the right-and-left direction of the vehicle;
a filler port (43); and
a fuel pipe (44) connecting the filler port (43) and the fuel tank (9), the fuel pipe (44) being at least in part disposed behind the front wheel (5) in the back-and-forth direction of the vehicle as seen in a vehicle side view, wherein
the first lower frame (13) includes a first frame front portion (51), the first frame front portion (51) being connected to the down frame (12), the first frame front portion (51) being located in front of the fuel tank (9) in the back-and-forth direction of the vehicle,
the first frame front portion (51) curves to further protrude forward than the down frame (12) in the back-and-forth direction of the vehicle as seen in a vehicle plan view, and
the fuel pipe (44) is disposed to pass behind the first frame front portion (51) in the back-and-forth direction of the vehicle, **characterized in that** the filler port (43) is disposed on the leg shield (35), and
the fuel pipe (44) at least in part overlaps the down frame (12) in a position located just behind the first frame front portion (51) in the back-and-forth direction of the vehicle as seen in the vehicle side view.

2. The straddled vehicle according to claim 1, **characterized in that** a front edge (511) of the first frame front portion (51) is at least in part located forward of a front edge (121) of the down frame (12) in the back-and-forth direction of the vehicle as seen in the vehicle side view.

3. The straddled vehicle according to claim 1 or 2, **characterized in that** a rear edge (512) of the first frame front portion (51) is at least in part located forward of a center axis (C2) of the down frame (12) in the back-and-forth direction of the vehicle as seen in the vehicle side view.

4. The straddled vehicle according to any of claims 1 to 3, **characterized in that** the second lower frame (14) includes a second frame front portion (53), the second frame front portion (53) being connected to the down frame (12), and
the first frame front portion (51) curves to further protrude forward than the second frame front portion (53) in the back-and-forth direction of the vehicle.

5. The straddled vehicle according to any of claims 1 to 4, **characterized in that** the first lower frame (13) includes a first connecting end portion (55), the first connecting end portion (55) being connected to the down frame (12),
the second lower frame (14) includes a second connecting end portion (56), the second connecting end portion (56) being connected to the down frame (12), and
the first connecting end portion (55) is at least in part located above the second connecting end portion (56) in the up-and-down direction of the vehicle as seen in a vehicle front view.

6. The straddled vehicle according to claim 5, **characterized in that** an upper end (551) of the first connecting end portion (55) is located above an upper end (561) of the second connecting end portion (56) in the up-and-down direction of the vehicle as seen in the vehicle front view.

7. The straddled vehicle according to claim 5 or 6, **characterized in that** a lower end (552) of the first connecting end portion (55) is located above a lower end (562) of the second connecting end portion (56) in the up-and-down direction of the vehicle as seen in the vehicle front view.

8. The straddled vehicle according to any of claims 5 to 7, **characterized in that** a center axis (C1) of the first lower frame (13) is located forward of the center axis (C2) of the down frame (12) at the first connecting end portion (55) in the back-and-forth direction of the vehicle as seen in the vehicle side view.

9. The straddled vehicle according to any of claims 5 to 8, **characterized in that** the rear edge (512) of the first frame front portion (51) is at least in part located forward of a rear end (553) of the first connecting end portion (55) in the back-and-forth direction of the vehicle as seen in the vehicle plan view.

10. The straddled vehicle according to any of claims 1 to 9, **characterized in that** the fuel pipe (44) includes
a first pipe portion (45) connected to the fuel tank (9),
a second pipe portion (46) disposed laterally to the down frame (12), and
a bent pipe portion (47) located between the first pipe portion (45) and the second pipe portion (46), and
the bent pipe portion (47) is located in front of the footboard (36) in the back-and-forth direction of the vehicle and overlaps the footboard (36) as seen in the vehicle front view.

11. The straddled vehicle according to claim 10, **characterized in that** the bent pipe portion (47) at least in part overlaps the down frame (12) as seen in the vehicle side view.

12. The straddled vehicle according to any of claims 1 to 11, **characterized in that** a front edge (441) of the fuel pipe (44) is located backward of the front edge (121) of the down frame (12) in the back-and-forth direction of the vehicle as seen in the vehicle side view.

## Patentansprüche

1. Ein Spreiz-Sitz-Fahrzeug, das umfasst:
ein Kopf-Rohr (11);
eine Lenk-Vorrichtung (3), die durch das Kopf-Rohr (11) drehbar gelagert ist;
ein Vorder-Rad (5), das drehbar durch die Lenk-Vorrichtung (3) gelagert ist;
einem Unterzug-Rahmen (12), der sich vom Kopf-Rohr (11) in einer Aufwärts- und Abwärts-Richtung des Fahrzeugs nach unten erstreckt;
einen ersten unteren Rahmen (13), der sich von dem Unterzug-Rahmen (12) in einer Vorwärts- und Rückwärts-Richtung des Fahrzeugs nach hinten und in einer Rechts- und Links-Richtung des Fahrzeugs zu einer der rechten und linken Seiten erstreckt;
einen zweiten unteren Rahmen (14), der sich von dem Unterzug-Rahmen (12) in der Vorwärts- und Rückwärts-Richtung des Fahrzeugs nach hinten und zur anderen der rechten und linken Seiten in der Rechts- und Links-Richtung des Fahrzeugs erstreckt;
einem ersten hinteren Rahmen (15), der sich in der Vorwärts- und Rückwärts-Richtung des Fahrzeugs nach hinten und von dem ersten unteren Rahmen (13) in der Aufwärts- und Abwärts-Richtung des Fahrzeugs nach oben erstreckt;
einen zweiten hinteren Rahmen (16), der sich in der Vorwärts- und Rückwärts-Richtung des Fahrzeugs nach hinten und von dem zweiten unteren Rahmen (14) in der Aufwärts- und Abwärts-Richtung des Fahrzeugs nach oben erstreckt;
einen Sitz (6), der über dem ersten hinteren Rahmen (15) und dem zweiten hinteren Rahmen (16) in Aufwärts- und Abwärts-Richtung des Fahrzeugs positioniert ist;
eine vordere Abdeckung (32), die vor dem Kopf-Rohr (11) und dem Unterzug-Rahmen (12) in der Vorwärts- und Rückwärts-Richtung des Fahrzeugs positioniert ist;
ein Bein-Schild (35), das hinter der vorderen Abdeckung (32) in der Vorwärts- und Rückwärts-Richtung des Fahrzeugs positioniert ist;
eine hintere Abdeckung (33), die unterhalb des Sitzes (6) in Aufwärts- und Abwärts-Richtung des Fahrzeugs positioniert ist;
ein Trittbrett (36), das über dem ersten unteren Rahmen (13) und dem zweiten unteren Rahmen (14) in der Aufwärts- und Abwärts-Richtung des Fahrzeugs positioniert ist, das Trittbrett (36) ist zwischen dem Bein-Schild (35) und der hinteren Abdeckung (33) in der Vorwärts- und Rückwärts-Richtung des Fahrzeugs positioniert;
einen Kraftstoff-Tank (9), der unterhalb des Trittbretts (36) in der Aufwärts- und Abwärts-Richtung des Fahrzeugs positioniert ist, wobei der Kraftstoff-Tank (9) zwischen dem ersten unteren Rahmen (13) und dem zweiten unteren Rahmen (14) in der Rechts- und Links-Richtung des Fahrzeugs positioniert ist;
ein Einfüll-Anschluss (43); und
eine Kraftstoff-Leitung (44), die den Einfüll-Anschluss (43) und den Kraftstoff-Tank (9) verbindet, die Kraftstoff-Leitung (44) ist zumindest teilweise hinter dem Vorder-Rad (5) in der Vorwärts- und Rückwärts-Richtung des Fahrzeugs, gesehen in einer Fahrzeug-Seiten-Ansicht, positioniert, wobei
der erste untere Rahmen (13) einen ersten Rahmen-Vorder-Abschnitt (51) beinhaltet,
der erste Rahmen-Vorder-Abschnitt (51) ist mit dem Unterzug-Rahmen (12) verbunden, der erste Rahmen-Vorder-Abschnitt (51) ist vor dem Kraftstoff-Tank (9) in der Vorwärts- und Rückwärts-Richtung des Fahrzeugs positioniert,
der erste Rahmen-Vorder-Abschnitt (51) ist gekrümmt, so dass er in einer Draufsicht auf das Fahrzeug weiter nach vorne ragt als der Unterzug-Rahmen (12) in Vorwärts- und Rückwärts-Richtung des Fahrzeugs, und
die Kraftstoff-Leitung (44) ist positioniert, so dass sie hinter dem ersten Rahmen-Vorder-Abschnitt (51) in der Vorwärts- und Rückwärts-Richtung des Fahrzeugs verläuft, **dadurch gekennzeichnet, dass**
der Einfüll-Anschluss (43) am Bein-Schild (35) positioniert ist, und
die Kraftstoff-Leitung (44) zumindest teilweise den Unterzug-Rahmen (12) in einer Position überlappt, die sich in der Fahrzeug-Seiten-Ansicht gesehen unmittelbar hinter dem ersten Rahmen-Vorder-Abschnitt (51) in Vorwärts- und Rückwärts-Richtung des Fahrzeugs befindet.

2. Das Spreiz-Sitz-Fahrzeug gemäß Anspruch 1, **dadurch gekennzeichnet, dass** eine Vorder-Kante (511) des Ersten Rahmen-Vorder-Abschnitts (51) zumindest teilweise vor einer Vorder-Kante (121) des Unterzug-Rahmens (12) in der Vorwärts- und Rückwärts-Richtung des Fahrzeugs, gesehen in der Fahrzeug-Seiten-Ansicht, positioniert ist.

3. Das Spreiz-Sitz-Fahrzeug gemäß Anspruch 1 oder 2, **dadurch gekennzeichnet, dass** eine Hinter-Kante (512) des ersten Rahmen-Vorder-Abschnitts (51) zumindest teilweise vor einer Mittel-Achse (C2) des Unterzug-Rahmens (12) in der Vorwärts- und Rückwärts-Richtung des Fahrzeugs, gesehen in der Fahrzeug-Seiten-Ansicht, positioniert ist.

4. Das Spreiz-Sitz-Fahrzeug gemäß einem der Ansprüche 1 bis 3, **dadurch gekennzeichnet, dass** der zweite untere Rahmen (14) einen zweiten Rahmen-Vorder-Abschnitt (53) aufweist, wobei der zweite Rahmen-Vorder-Abschnitt (53) mit dem Unterzug-Rahmen (12) verbunden ist, und
der erste Rahmen-Vorder-Abschnitt (51) gekrümmt ist, so dass er weiter nach vorne vorsteht als der zweite Rahmen-Vorder-Abschnitt (53) in der Vorwärts- und Rückwärts-Richtung des Fahrzeugs.

5. Das Spreiz-Sitz-Fahrzeug gemäß einem der Ansprüche 1 bis 4, **dadurch gekennzeichnet, dass** der erste untere Rahmen (13) einen ersten Verbindungs-End-Abschnitt (55) aufweist, der erste Verbindungs-End-Abschnitt (55) ist mit dem Unterzug-Rahmen (12) verbunden,
der zweite untere Rahmen (14) einen zweiten Verbindungs-End-Abschnitt (56) aufweist, der zweite Verbindungs-End-Abschnitt (56) ist mit dem Unterzug-Rahmen (12) verbunden, und
der erste Verbindungs-End-Abschnitt (55) zumindest teilweise über dem zweiten Verbindungs-End-Abschnitt (56) in Aufwärts- und Abwärts-Richtung des Fahrzeugs, gesehen in einer Fahrzeug-Front-Ansicht, positioniert ist.

6. Das Spreiz-Sitz-Fahrzeug gemäß Anspruch 5, **dadurch gekennzeichnet, dass** ein oberes Ende (551) des ersten Verbindungs-End-Abschnitts (55) über einem oberen Ende (561) des zweiten Verbindungs-End-Abschnitts (56) in der Aufwärts- und Abwärts-Richtung des Fahrzeugs, gesehen in einer Fahrzeug-Front-Ansicht, positioniert ist.

7. Das Spreiz-Sitz-Fahrzeug gemäß Anspruch 5 oder 6, **dadurch gekennzeichnet, dass** ein unteres Ende (552) des ersten Verbindungs-End-Abschnitts (55) über einem unteren Ende (562) des zweiten Verbindungs-End-Abschnitts (56) in der Aufwärts- und Abwärts-Richtung des Fahrzeugs, gesehen in einer Fahrzeug-Front-Ansicht, positioniert ist.

8. Das Spreiz-Sitz-Fahrzeug gemäß einem der Ansprüche 5 bis 7, **dadurch gekennzeichnet, dass** eine Mittel-Achse (C1) des ersten unteren Rahmens (13) vor der Mittel-Achse (C2) des Unterzug-Rahmens (12) am ersten Verbindungs-End-Abschnitt (55) in der Vorwärts- und Rückwärts-Richtung des Fahrzeugs, gesehen in der Fahrzeug-Seiten-Ansicht, positioniert ist.

9. Das Spreiz-Sitz-Fahrzeug gemäß einem der Ansprüche 5 bis 8, **dadurch gekennzeichnet, dass** die Hinter-Kante (512) des ersten Rahmen-Vorder-Abschnitts (51) zumindest teilweise vor einem hinteren Ende (553) des ersten Verbindungs-End-Abschnitts (55) in der Vorwärts- und Rückwärts-Richtung des Fahrzeugs, gesehen in der Fahrzeug-Draufsicht, positioniert ist.

10. Das Spreiz-Sitz-Fahrzeug gemäß einem der Ansprüche 1 bis 9, **dadurch gekennzeichnet, dass** die Kraftstoff-Leitung (44) beinhaltet
einen ersten Leitungs-Abschnitt (45), der mit dem Kraftstoff-Tank (9) verbunden ist, einen zweiten Leitungs-Abschnitt (46), der seitlich zum Unterzug-Rahmen (12) positioniert ist, und
einen gebogenen Leitungs-Abschnitt (47), der zwischen dem ersten Leitungs-Abschnitt (45) und dem zweiten Leitungs-Abschnitt (46) positioniert ist, und
der gebogene Leitungs-Abschnitt (47) vor dem Trittbrett (36) in der Vorwärts- und Rückwärts-Richtung des Fahrzeugs positioniert ist und das Trittbrett (36) in der Fahrzeug-Front-Ansicht gesehen überlappt.

11. Das Spreiz-Sitz-Fahrzeug gemäß Anspruch 10, **dadurch gekennzeichnet, dass** der gebogene Leitungs-Abschnitt (47) den Unterzug-Rahmen (12) in der Fahrzeug-Seiten-Ansicht zumindest teilweise überlappt.

12. Das Spreiz-Sitz-Fahrzeug gemäß einem der Ansprüche 1 bis 11, **dadurch gekennzeichnet, dass** eine Vorder-Kante (441) der Kraftstoff-Leitung (44) in der Fahrzeug-Seiten-Ansicht gesehen hinter der Vorder-Kante (121) des Unterzug-Rahmens (12) in Vorwärts-Rückwärts-Richtung des Fahrzeugs positioniert ist.

## Revendications

1. Véhicule à enfourcher comprenant :
un tube de tête de fourche (11) ;
un dispositif de direction (3) soutenu en rotation par le tube de tête de fourche (11) ;
une roue avant (5) soutenue en rotation par le dispositif de direction (3) ;
un élément de cadre descendant (12) s'étendant vers le bas depuis le tube de tête de fourche (11) dans une direction haut-bas du véhicule ;
un premier élément de cadre inférieur (13) s'étendant vers l'arrière dans une direction avant-arrière du véhicule et vers un de côtés droit et gauche depuis l'élément de cadre descendant (12) dans une direction droite-gauche du véhicule ;
un deuxième élément de cadre inférieur (14) s'étendant vers l'arrière dans la direction avant-arrière du véhicule et vers l'autre des côtés droit et gauche depuis l'élément de cadre descendant (12) dans la direction droite-gauche du véhicule ;
un premier élément de cadre arrière (15) s'étendant vers l'arrière dans la direction avant-arrière du véhicule et vers le haut depuis le premier élément de cadre inférieur (13) dans la direction haut-bas du véhicule ;
un deuxième élément de cadre arrière (16) s'étendant vers l'arrière dans la direction avant-arrière du véhicule et vers le haut depuis le deuxième élément de cadre descendant (14) dans la direction haut-bas du véhicule ;
un siège (6) disposé au-dessus du premier élément de cadre arrière (15) et du deuxième élément de cadre arrière (16) dans la direction haut-bas du véhicule ;
un capot avant (32) disposé devant le tube de tête de fourche (11) et l'élément de cadre descendant (12) dans la direction avant-arrière du véhicule ;
un protège-jambes (35) disposé derrière le capot avant (32) dans la direction avant-arrière du véhicule ;
un capot arrière (33) disposée au-dessous du siège (6) dans une direction haut-bas du véhicule ;
un repose-pieds (36) disposé au-dessus du premier élément de cadre inférieur (13) et du deuxième élément de cadre inférieur (14) dans la direction haut-bas du véhicule, le repose-pieds (36) étant disposé entre le protège-jambes (35) et le capot arrière (33) dans la direction avant-arrière du véhicule ;
un réservoir de carburant (9) disposé au-dessous du repose-pieds (36) dans la direction haut-bas du véhicule, le réservoir de carburant (9) étant disposé entre le premier élément de cadre inférieur (13) et le deuxième élément de cadre inférieur (14) dans la direction droite-gauche du véhicule ;
un orifice de remplissage (43) ; et
une conduite de carburant (44) connectant l'orifice de remplissage (43) et le réservoir de carburant (9), la conduite de carburant (44) étant au moins en partie disposée derrière la roue avant (5) dans la direction avant-arrière du véhicule tel qu'observé dans une vue latérale de véhicule, dans lequel
le premier élément de cadre inférieur (13) inclut une partie avant de premier élément de cadre (51), la partie avant de premier élément de cadre (51) étant connectée à l'élément de cadre descendant (12), la partie avant de premier élément de cadre (51) étant située devant le réservoir de carburant (9) dans la direction avant-arrière du véhicule, la partie avant de premier élément de cadre (51) s'incurve pour déborder plus en avant que l'élément de cadre descendant (12) dans la direction avant-arrière du véhicule tel qu'observé dans une vue en plan de véhicule, et
la conduite de carburant (44) est disposée pour passer derrière la partie avant de premier élément de cadre (51) dans la direction avant-arrière du véhicule, **caractérisé en ce que**
l'orifice de remplissage (43) est disposé sur le protège-jambes (35), et
la conduite de carburant (44) au moins en partie chevauche l'élément de cadre descendant (12) à un emplacement situé juste derrière la partie avant de premier élément de cadre (51) dans la direction avant-arrière du véhicule tel qu'observé dans la vue latérale de véhicule.

2. Le véhicule à enfourcher selon la revendication 1, **caractérisé en ce qu'**un bord avant (511) de la partie avant de premier élément de cadre (51) est au moins en partie situé en avant d'un bord avant (121) de l'élément de cadre descendant (12) dans la direction avant-arrière du véhicule tel qu'observé dans la vue latérale de véhicule.

3. Le véhicule à enfourcher selon la revendication 1 ou 2, **caractérisé en ce qu'un** bord arrière (512) de la partie avant de premier élément de cadre (51) est au moins en partie situé en avant d'un axe central (C2) de l'élément de cadre descendant (12) dans la direction avant-arrière du véhicule tel qu'observé dans la vue latérale de véhicule.

4. Le véhicule à enfourcher selon l'une quelconque des revendications 1 à 3, **caractérisé en ce que** le deuxième élément de cadre inférieur (14) inclut une partie avant de deuxième élément de cadre (53), la partie avant de deuxième élément de cadre (53) étant connectée à l'élément de cadre descendant (12), et
la partie avant de premier élément de cadre (51) s'incurve pour déborder plus en avant que la partie avant de deuxième élément de cadre (53) dans la direction avant-arrière du véhicule.

5. Le véhicule à enfourcher selon l'une quelconque des revendications 1 à 4, **caractérisé en ce que** le deuxième élément de cadre inférieur (13) inclut une première partie d'extrémité de connexion (55), la première partie d'extrémité de connexion (55) étant connectée à l'élément de cadre descendant (12),
le deuxième élément de cadre inférieur (14) inclut une deuxième partie d'extrémité de connexion (56), la deuxième partie d'extrémité de connexion (56) étant connectée à l'élément de cadre descendant (12), et la première partie d'extrémité de connexion (55) est au moins en partie située au-dessus de la deuxième partie d'extrémité de connexion (56) dans la direction haut-bas du véhicule tel qu'observé dans une vue avant de véhicule.

6. Le véhicule à enfourcher selon la revendication 5, **caractérisé en ce qu'**une extrémité avant (551) de la première partie d'extrémité de connexion (55) est située au-dessus d'une extrémité supérieure (561) de la deuxième partie d'extrémité de connexion (56) dans la direction haut-bas du véhicule tel qu'observé dans la vue avant de véhicule.

7. Le véhicule à enfourcher selon la revendication 5 ou 6, **caractérisé en ce qu'**une extrémité inférieure (552) de la première partie d'extrémité de connexion (55) est située au-dessus d'une extrémité inférieure (562) de la deuxième partie d'extrémité de connexion (56) dans la direction haut-bas du véhicule tel qu'observé dans la vue avant de véhicule.

8. Le véhicule à enfourcher selon l'une quelconque des revendications 5 à 7, **caractérisé en ce qu'**un axe central (C1) du premier élément de cadre inférieur (13) est situé en avant de l'axe central (C2) de l'élément de cadre descendant (12) au niveau de la première partie d'extrémité de connexion (55) dans la direction avant-arrière du véhicule tel qu'observé dans la vue latérale de véhicule.

9. Le véhicule à enfourcher selon l'une quelconque des revendications 5 à 8, **caractérisé en ce que** le bord arrière (512) de la partie avant de premier élément de cadre (51) est au moins en partie situé en avant d'une extrémité arrière (553) de la première partie d'extrémité de connexion (55) dans la direction avant-arrière du véhicule tel qu'observé dans la vue en plan de véhicule.

10. Le véhicule à enfourcher selon l'une quelconque des revendications 1 à 9, **caractérisé en ce que** la conduite de carburant (44) inclut
une première partie de conduite (45) connectée au réservoir de carburant (9),
une deuxième partie de conduite (46) disposée latéralement par rapport à l'élément de cadre descendant (12), et
une partie de conduite coudée (47) située entre la première partie de conduite (45) et la deuxième partie de conduite (46), et
la partie de conduite coudée (47) est située devant le repose-pieds (36) dans la direction avant-arrière du véhicule et chevauche le repose-pieds (36) tel qu'observé dans la vue avant de véhicule.

11. Le véhicule à enfourcher selon la revendication 10, **caractérisé en ce que** la partie de conduite coudée (47) au moins en partie chevauche l'élément de cadre descendant (12) tel qu'observé dans la vue latérale de véhicule.

12. Le véhicule à enfourcher selon l'une quelconque des revendications 1 à 11, **caractérisé en ce qu'**un bord avant (441) de la conduite de carburant (44) est situé en arrière du bord avant (121) de l'élément de cadre descendant (12) dans la direction avant-arrière du véhicule tel qu'observé dans la vue latérale de véhicule.
